# EUROPEAN PATENT SPECIFICATION

(11) **EP 3 997 986 B1**
(45) Date of publication and mention of the grant of the patent: **24.09.2025**
(21) Application number: 20020666.2
(22) Date of filing: 30.12.2020
(51) Int. Cl.: A23L 19/00, A23L 29/10, A23L 29/212, A23L 33/115, A23P 10/43, A23P 10/40, A23P 10/47, A23G 3/48

(54) **WHOLE FRUIT POWDER AND PRODUCTION METHOD THEREOF**
VOLLFRUCHTPULVER UND DESSEN HERSTELLUNGSVERFAHREN
POUDRE DE FRUITS ENTIERS ET SON PROCÉDÉ DE PRODUCTION

(30) Priority: 17.03.2020 TR 202004159; 25.12.2020 TR 202021765
(43) Date of publication of application: 18.05.2022
(73) Proprietor: Eti Gida Sanayi Ve Ticaret Anonim Sirketi, 26110 Eskisehir (TR)
(72) Inventor: Görgülü, Ahmet, 26110 Eskisehir (TR); Marasli, Serdar, 26110 Eskisehir (TR); Demirci, Sultan, 26110 Eskisehir (TR)
(74) Representative: Kaya, Erdem

(56) References cited:
- WO-A2-2006/045742
- WO-A2-2008/016823
- CN-A- 103 976 306
- US-A1- 2013 251 884
- CANO-CHAUCA M ET AL: "Effect of the carriers on the microstructure of mango powder obtained by spray drying and its functional characterization", INNOVATIVE FOOD SCIENCE AND EMERGING TECHNOLOGIES, ELSEVIER, AMSTERDAM, NL, vol. 6, no. 4, 1 December 2005 (2005-12-01), pages 420 - 428, XP027837736, ISSN: 1466-8564, [retrieved on 20051201]
- GABAS ET AL: "Effect of maltodextrin and arabic gum in water vapor sorption thermodynamic properties of vacuum dried pineapple pulp powder", JOURNAL OF FOOD ENGINEERING, ELSEVIER, AMSTERDAM, NL, vol. 82, no. 2, 13 April 2007 (2007-04-13), pages 246 - 252, XP022027065, ISSN: 0260-8774, DOI: 10.1016/J.JFOODENG.2007.02.029
- COULTER S T ET AL: "SPRAY DRYING FRUITS AND VEGETABLES USING SKIMMILK AS A CARRIER", JOURNAL OF DAIRY SCIENCE, AMERICAN DAIRY SCIENCE ASSOCIATION, US, vol. 49, 1 January 1966 (1966-01-01), pages 762 - 767, XP002031367, ISSN: 0022-0302
- SILVA-ESPINOZA MARILU ANDREA ET AL: "Use of different biopolymers as carriers for purposes of obtaining a freeze-dried orange snack", LWT- FOOD SCIENCE AND TECHNOLOGY, vol. 127, 14 April 2020 (2020-04-14), United Kingdom, pages 109415, XP055910036, ISSN: 0023-6438, DOI: 10.1016/j.lwt.2020.109415

## Description

### TECHNICAL AREA

The invention relates to whole fruit powder for use in the food industry and production method thereof.

### PRIOR ART

In today's world, sugar, of which consumption rate increases every year, meets a significant part of people's nutritional and energy needs and makes people happy by meeting their taste needs. However, when sugar, which is naturally found in many plants, is desired to be used in various foodstuffs, consumers have to consume refined sugar (crystal sugar) that has undergone many industrial processes. Although refined sugar does not have a direct harm to human health in the short term due to its high glycemic index, it adversely affects human health by causing diseases such as diabetes and obesity in the long term, as can be seen in many research results. Therefore, throughout the world and in Turkey, the studies are carried out to develop various sugar substitutes and to remove or reduce crystal sugar from product recipes.

In the state of the art, high levels of crystal sugar are used in chocolate and fat-based fillings (40% -50% in milk chocolate, 20% -45% in dark chocolate), and 10-30% in bakery products such as biscuits and cakes. In order to reduce the negative effects of sugar on health, natural or synthetic sweeteners except refined sugar are mostly used as a sweetening compound in products such as chocolate, biscuit and cake. However, since the sweetness values of these sweeteners are much higher than crystal sugar, they are used in very small amounts compared to sugar, and the remaining difference is tried to be covered by the use of high amounts of fillers such as inulin and isomalt. The high amount using fillers such as inulin and isomalt, on the other hand, weakens the eating experience by affecting the rheological and structural properties of chocolates, cakes, biscuits and fat-based fillings. In addition, since these sweeteners do not contain nutrients such as vitamins and minerals, they are considered an "empty energy source". However, fruits with high nutritional value with proper recipe development and drying methods, can be used as a source of sugar.

Fruits are used in the production of bakery products, sugary products and various sauces for purposes such as a natural sweetener, nutritional value enhancer, flavoring and coloring agent, due to the high sugar concentration they contain. However, due to the high water content of fruits (80-95%), some difficulties arise in using them as food inputs. This situation restricts the usage areas of fresh fruits in the food industry. With the increase in the amount of water in the food products they are used in, the mixture may become unprocessed and there may be a shelf life problem as the amount of moisture in the final product increases. Due to these restrictions, fruit juice with high water content or fruit juice concentrate should not be used. By eliminating these disadvantages, fruits can be used as sweetening, enrichment, preservative or coloring and flavoring in food products, but it is possible to reduce the moisture content by drying, and pulverize them. However, fructose, which is one of the natural compounds of the fruit, causes stickiness and hence caking in fruit powders during and after the drying process due to the fact that its glass transition temperature is low. For this reason, it is not possible that e fruits with high moisture content can be directly used in products with low moisture requirements such as chocolates and fat-based food fillings. These fruits can only be used by isolating their sugars or by mixing them with anti-caking agents such as starch, maltodextrin, silicon dioxide to prevent stickiness, caking and blocking and stickiness of the sugar. The mentioned stickiness-removing agents, on the other hand, are undesirable ingredients especially in chocolate and similar products, as they negatively affect the physical properties (color, hardness, etc.), flavor integrity (starch-like taste formation), product quality of the final product and change the crystal structure of the product. As a result, the use of the fruit as a sweetener makes it difficult to process, and the unnecessary use of additives impairs the quality of the final product.

In the current art, honey and molasses powder are used as sweeteners instead of refined sugar in chocolates and similar products. However, these products do not have a diversity of vitamins, minerals and flavors that come from the diversity of fruits. Especially molasses has a lower aroma content than fruit powder because it is processed. Such advantage cannot be provided in honey powder and similar products.

In addition, fruit powder also makes it possible to evaluate fruits such as watermelon, melon, peach, apple, plum, etc., which are produced in large quantities seasonally but are mostly wasted and not industrially used. It also makes it possible to evaluate fruits. In addition to making it possible to use the fruits as a food additive by converting them into powder form, their usage areas are becoming widespread, as their transportation and storage will be easier.

During the prior art search, the application, with the publication number WO2013140382 A2 was found. The subject of application discloses a method for producing fruit juice powder. Accordingly, the process described in the document comprises the steps of washing and cleaning of fruits, pupling fruits in a two stage pulper and obtaining juice, passing juice through strainer having mesh size 400-500 micron, preparing fruit concentrate at 66-72° Brix, converting fruit concentrations to powders by spray drying process, grinding in pin mill for uniform distribution of ingredients and mixing the powder.

The patent application with the application number TR 2020/04159 is related to the fruity powder and its production method with a maximum moisture content of 3% by weight. Said fruit powder is obtained by drying the fruit, which has a sweetening property, preserves its natural aroma and nutritional properties, together with one or more combinations of the group consisting of milk, milk powder, whey, whey powder, cocoa powder. WO 2008/016823 A2 discloses a process for preparing whole fruit cherry powder, by making a cherry puree from the mash of raw cherries and evaporation, adding as carrier cranberry fibre and gum or a mixture of maltodextrin, CMC and lecithin, drying the obtained concentrate and grinding. A process for preparing a whole fruit powder comprising the steps of mixing fruit puree with skim milk solids and spray drying the material to obtain a powder and milling is described by Coulter, S. T. and Breene, W.M. ("Spray drying fruits and vegetables using skim milk as carrier", Journal of Dairy Science, Vol. 49 (1) 1966, p. 762-767).

As a result, due to the disadvantages described above and the insufficiency of existing solutions, it was necessary to make an improvement in the relevant technical field.

### BRIEF DESCRIPTION OF THE INVENTION

The present invention relates to the whole fruit powder and its production method that meets the above-mentioned requirements, eliminates all disadvantages and brings some additional advantages. In the technical field, the expression whole fruit powder means the form in which the fruit is processed with minimal loss in such a way that the edible parts are included, the nutritional values are maximized.

The main object of the invention is to obtain a sugar substitute of which source is fruit. In the invention, a healthy sugar alternative is produced by removing the water of fruits with high sugar content and nutritional value.

The object of the invention is to produce a whole fruit powder that can be easily processed and of which color and aroma are preserved. In the method of the invention, it is possible to preserve the color of the whole fruit and its processability is facilitated by the addition of organic acid (ascorbic acid, citric acid etc.), short-term heat treatment and enzymatic processes, which are preferably applied.

The object of the invention is to provide a final fruit powder in which the product properties caused by the high content of fructose in the fruit content are eliminated. In the invention, the raw materials such as cocoa butter, cocoa liquor, cocoa powder, milk, milk powder, whey, whey powder, starch, flour, oil, emulsifier, gum, protein isolate, which are available in the food products like chocolate, fat-based filling, biscuit, cake etc., are used instead of compounds such as maltodextrin, silicon dioxide, artificial flavor, artificial colorant for the purposes of removing the stickiness caused by fructose. The negative properties such as stickiness and caking encountered in whole fruit powder can be prevented with the use of raw materials such as milk powder containing lactose having a high glass transition temperature (101 ⁰C) and cocoa powder having a fiber content of up to 33%. Additionally, the whole fruit powders, of which structure, taste, aroma and color are developed specifically for the finished product, can be obtained with the addition of one or more of the different raw materials to the fruit puree depending on the final product properties in which the whole fruit powder will be used.

The object of the invention is to prepare a whole fruit powder that can be obtained with different process step alternatives, and also suitable for different usage purposes. In the invention, one or more of cocoa butter, cocoa liquor, cocoa powder, milk, milk powder, starch, flour, oil emulsifier, is added to the fruit puree obtained according to the product in which the fruit powder will be used and then this formed mixture are dried by drum drying method. The obtained fruit powder has a moisture content varying between 3-6% by weight.

The object of the invention is to develop a whole fruit powder production method for use in products such as fat-based fillings, biscuits and cakes. Optionally, in the invention, the fruit powder is again mixed with one or more of cocoa butter, cocoa liquor, cocoa powder, milk, milk powder, whey, whey powder, starch, flour, oil, emulsifier, gum, protein isolate and passed through the refining rollers and thereby the surface area can be increased by reducing the particle size ranging from 500µ to 150-350µ.

Another object of the invention is to obtain as much powder from the fruit as possible. Since the total amount of sugar in the fruit and also the amount of fructose in this sugar is high, only the glass transition temperature of the fruit itself is far below the temperature of the drum dryer. This causes stickiness during the drying process and cracking after drying. In order to prevent this situation, in the invention, the glass transition temperature of the fruit mixture is increased with the addition of flour, starch, cocoa powder, etc., which are the carrier compounds with high glass transition temperature, to the fruit puree, whereby it is aimed to prevent stickiness while drying.

Another object of the invention is that no extra production steps such as encapsulation are required to reduce stickiness. In this way, fruit powder production is produced with fewer processing steps. A disadvantage of fruit powders in the prior art is that an additional process step for encapsulating the fruit powders is added to the production steps when little or no maltodextrin is used. With this added process, the high viscosity fruit powders produced are encapsulated with hydrocolloids such as gum arabic and xanthan to reduce their stickiness. However, it is also a disadvantage that the addition of said process step prolongs the production process. Because this situation causes loss in terms of labor, work and time. Also, the number of ingredients in the food product in which the fruit powder will be used is increasing.

The structural and characteristic features and all advantages of the invention will be understood more clearly thanks to the figures given below and the detailed explanation written by making references to these figures. Therefore, the evaluation should be made by taking these figures and detailed explanations into consideration.

### BRIEF DESCRIPTION OF THE FIGURES

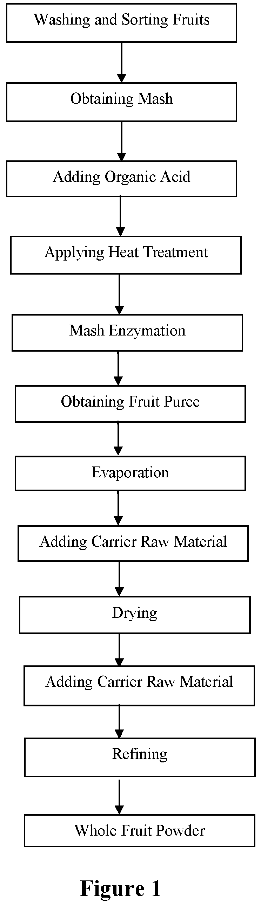

Figure 1 shows the flow chart of the whole fruit powder production method.

### DETAILED DESCRIPTION OF THE INVENTION

In this detailed description, the preferred applications of the inventive whole fruit powder and production method are explained only for a better understanding of the subject matter. This application has been prepared as an additional application to the patent application number TR 2020/04159.

The invention relates to whole fruit powder and production method for use in the food industry. Said whole fruit powder comprises;
- fruit in the range of 75-95% by weight,
- a carrier agent containing one or more of cocoa butter, cocoa liquor, cocoa powder, milk, milk powder, starch, flour oil, emulsifier, in the range of 5-25% by weight.

In a preferred application of the invention, these proportions are 95% by weight of fruit and 5% by weight of carrier.

Figure 1 shows the flow chart of the whole fruit powder production method. Accordingly, in the said production method, firstly the fruits to be used in the production of fruit powder are washed and sorted. After the washing and sorting process, mash is obtained from said fruits. While mash is formed according to the fruit to be used and the whole fruit powder properties desired to be obtained, the edible parts of the fruit are made into puree or divided into certain sized pieces. Even if any of these two forms are used, since the surface area of the fruit is increased in the mash production, the polyphenol oxidase enzymes in the fruit contact with oxygen and form compounds that cause color darkening. At this stage, if the color of the obtained whole fruit powder is desired to be light or not to be darkened, organic acid (ascorbic acid, citric acid, etc.) is added to the mash to prevent this darkening. The amount of organic acid is in the range of 150-350 mg for 1 kg of mash. If desired, heat treatment can be applied at temperatures ranging from 80 °C to 90 °C, preferably for periods ranging from 1-10 minutes, to inactivate undesirable enzymes such as the polyphenol oxidase enzyme contained in the fruit and also to soften the cell tissues of the fruit. In this process called Blanching, the temperature and time at which the polyphenol oxidase enzyme will be inactivated are preferred. For this reason, a temperature and a short time where the nutritional values of the fruit will be least lost (below 100 °C) are preferred.

In the method of the present invention, before any enzyme is applied to the mash, the surface area can be increased as a result of breaking of some bonds in the compounds such as fiber, cellulose, hemicellulose,

lignin, pectin in the mash, by partially and completely degradation of these compounds by physical methods such as homogenization and centrifuge.

In the method of the present invention, degradation of the mash can be achieved by enzymatic means, depending on the preference. It is decided whether or not to apply enzyme applications according to the amount of compounds such as fiber, cellulose, hemicellulose, lignin, pectin, starch contained in the fruit used and the usage areas of the whole fruit powder to be obtained. For this purpose, mash maceration for enzymatic partial degradation of pectin in the middle lamella of mash cells and mash fermentation for more intense degradation of pectin in the middle lamella and cell wall and partial or complete degradation of compounds such as pectin, lignin, cellulose, hemicellulose as well as pectin in mash by enzymatic methods such as pulp enzyme or total liquefaction, saccharification or depectinization. can be achieved. Enzymes such as polygalacturonase, pectaliasis, pectinase, pectinliasis, pectinesterase, cellulase, hemicellulase as well as amylase starch which are available in the structure of the fruits can be optionally used in the enzymatic methods applied for the degradation of the above-mentioned compounds such as pectin, lignin, cellulose, hemicellulose. At this stage, the recommended usage amount for each enzyme used and the working temperature at which the enzyme will work should be used. For example, for a pectin lyase enzyme originating from *Aspergillus niger,* it is recommended that preferably the amounts ranging from 3 to 7 grams of enzyme are added to 10 kilograms of mash, and the enzyme is kept preferably at temperatures ranging from 45 °C to 50 °C, preferably for a duration ranging from 1 to 3 hours, while for a cellulase/hemicellulase enzyme originating from T.reesei, it is recommended that preferably the amounts ranging from 2 to 10 grams of enzyme to 10 kg of mash, and the enzyme is kept preferably at temperatures ranging from 50 °C to 60 °C, preferably for a duration ranging from 1 to 3 hours. In order not to denature the protein structures of enzymes and lose their effectiveness, a temperature application should not be performed above the recommended temperatures. If mash enzymation is to be performed, preferably mash is prepared in larger pieces compared to puree, whereby water between tissues are preserved.

The evaporation method is used to increase the dry matter proportion of the mash to which enzymatic process is applied or not. Fruit puree, of which dry matter proportion varies between 30% to 65% by weight (25-64° Brix), can be obtained from the mash, which is obtained from fresh fruits and of which dry matter proportion varies between 5% and 25% by weight (2-24° Brix), by evaporation method. Said dry matter amount is in the range of the dry matter proportion at which the drum dryer can work optimally.

Thanks to evaporation, most of the moisture in the mash is removed before it reaches the drying stage, and a concentrated form is obtained. The said evaporator runs under vacuum, preferably at temperatures ranging from 80 °C to 100 °C. Due to the nature of the process, it is not possible for the temperature to rise above 100 °C. At the same time, the concentration of the puree is increased in the said temperature range, and also its nutritional value is preserved by way of the vacuum..

Since the fruit puree obtained contains a high amount of fructose and the glass transition temperature of fructose is low (preferably 5 °C), there is stickiness in the whole fruit powders due to fructose during drying and caking in the product obtained after drying. In order to prevent this, taking into account the product for which the whole fruit powder will be used, one or more of the raw materials specific to that product is added to the fruit puree. Said raw materials are carrier raw materials selected from cocoa butter, cocoa liquor, cocoa powder, milk, milk powder, starch, flour, oil, and emulsifier. The addition of carrier raw materials contributes to the fact that the developed whole fruit powders are specific to the product to be used in terms of taste, aroma and color.

The temperature of the fruit puree with added carrier compounds should be 60-100 °C. It is important that this temperature is close to the optimum operating temperature of the drum dryer and that the temperature difference is minimum in order to prevent stickiness while drying.

Said drying process takes place at temperatures ranging from 110 °C to 170 °C, preferably 120 °C to 150 °C (preferably 120-140 °C), preferably at pressures ranging from 2 to 4 bar. Thus, moisture in the range of 3-6% by weight is provided by removing the water in the puree. At the same time, it is possible to keep the temperature difference between the glass transition temperature of the puree and the operating temperature of the drum dryer at minimum as much as possible. The pressure range given is preferred due to the technical features of the equipment used.

Caramel flavor and aroma may occur in the whole fruit powder obtained after drying, due to caramelization (initial caramelization temperature 110 °C for fructose; initial caramelization temperature 160 °C for galactose, glucose or sucrose; initial caramelization temperature 160 °C for maltose) since the temperature is greater than 110 °C. In addition, when milk and/or milk powder are used as carrier compounds in the mixture, milk taste and milk aroma may also occur in the whole fruit powder due to these compounds . before being used in products such as chocolate, fat-based filling, biscuits and cakes, the whole fruit powder obtained after cooling and drying processes is optionally mixed with one or more carrier compounds such as cocoa butter, cocoa liquor, cocoa powder, milk, milk powder, whey, whey powder, starch, flour, oil, emulsifier, gum, protein isolate and passed through the refining rollers, whereby the particle size varying between 300-500µ is reduced to 150-350µ, and thus the surface area is increased.

The total sugar content of the whole fruit powder obtained varies according to the product to be used and the carrier compounds used, and can be in the range of 30-85% by weight.

In order to test the efficiency of the production method according to the invention, samples were produced with different parameters and process step alternatives. Information on these samples is given below.

### Sample Application 1: Development of Whole Fruit Powder from Watermelon for Use in Biscuit

| **Raw materials** | **Usage Proportion (by weight)** |
|---|---|
| Watermelon | 84% |
| Starch | 16% |

In the mentioned exemplary application, it is preferred to prepare the mash as a puree and not to apply any enzymes. 250 mg of ascorbic acid was added per kilogram of mash. The mash concentrate was increased from 11° Brix to 44° Brix by vacuum application in the evaporator at 95⁰C- 98⁰C. Starch was added to the prepared watermelon mash at a rate of 16% by weight and dried in a drum dryer at 150 ° C and 2-4 bar pressure. The whole fruit powder obtained from watermelon has a moisture content of 3.87% by weight and a total sugar content of 35% by weight.

### Sample Application 2: Development of Whole Fruit Powder from Watermelon for Use in 54% Bitter Chocolate

| **Raw materials** | **Usage Proportion (% by weight)** |
|---|---|
| Watermelon | 93.5% |
| Natural Cocoa Liqueur | %2 |
| Natural Cocoa Powder | 4% |
| Emulsifier (Lecithin) | 0.5% |

In the mentioned exemplary application, it is preferred that the mash is prepared as a mash and no enzyme application is made and no organic acid is added. The mash concentrate was increased from 12° Brix to 52° Brix by vacuum application in the evaporator at 95 °C-98 °C. 2% by weight of natural cocoa liquor, 4% by weight of natural cocoa powder and 0.5% by weight of lecithin were added to the prepared watermelon puree and dried in drum dryers at 154 °C and 2-4 bar pressure. The whole fruit powder obtained from watermelon has a moisture content of 3.58% by weight and a total sugar content of 47.41% by weight.

Table below shows usage amounts by weight for trials of whole fruit powder derived from watermelon .

| **Usage Amount (% by weight)** | | | | | | |
|---|---|---|---|---|---|---|
| | Watermelon | Cocoa Powder | Cocoa Liqueur | Milk powder | Emulsifier | Total Sugar Amount (%) |
| Trial-1 | 75 | 5 | 7.5 | 12 | 0.5 | 27.88 |
| Trial-2 | 81,5 | 3 | 5 | 10 | 0.5 | 39.48 |
| Trial-3 | 87,5 | 2 | 2 | 8 | 0.5 | 43.45 |
| Trial-4 | 91,5 | 4 | 4 | - | 0.5 | 44.69 |
| Trial-5 | 93,5 | 2 | 4 | - | 0.5 | 47.41 |

### Sample Application 3: Development of Whole Fruit Powder from Apple for Use in Plain Small Cakes with Cocoa

| **Raw materials** | **Usage Proportion(% by weight)** |
|---|---|
| Apple | 89.5% |
| Cake Flour | 8% |
| Vegetable Oil Used in Cake | %2 |
| Emulsifier (GMS) | 0.5% |

In the mentioned exemplary application, after the apples are cut into large pieces, 300 mg of ascorbic acid is added to each 1 kilogram of fruit. The mash kept at 85 °C-90 °C for 10 minutes was cooled to the temperature recommended for the pectinliasis enzyme and kept at 45 °C for 2 hours. At this stage, 0.5 grams of pectinliasis enzyme was added to each 1 kg of mash. A second enzyme application with hemicellulase was applied to the mash treated with pectinliasis enzyme. After adding 1 gram of hemicellulase to each 1 kg of mash, it was kept at 55 °C for 2 hours. After the enzyme applications were completed, the apple mash made into puree form was concentrated in the evaporator at 89-92 °C until it reached 40° Brix. 8% by weight of cake flour, 2% by weight of oil and 0.5% by weight of emulsifier (GMS) were added to the prepared apple puree and the apple puree is dried in drum dryer at 144 °C and 2-4 bar pressure. The whole fruit powder obtained from apple has a moisture content of 2.1% by weight and a total sugar content of 70.87% by weight.

The table showing the weight usage amounts for the whole fruit powder trials obtained from apples is given below.

| **Usage Amount (% by weight)** | | | | | | |
|---|---|---|---|---|---|---|
| | Apple Apple | Flour | Oil | Gamut | Emulsifier | Total Sugar Amount |
| | | | | | | (%) |
| Trial-1 | 92,5 | 4 | - | 3 | 0.5 | 53,07 |
| Trial-2 | 95 | - | - | 4.3 | 0.7 | 61,29 |
| Trial-3 | 86,5 | 13,5 | - | - | - | 53.86 |
| Trial-4 | 91 | 9 | - | - | - | 58.35 |
| Trial-5 | 89,5 | 8 | 2 | - | 0.5 | 70.87 |

In order to solve the problems in the technical field and to fulfill the mentioned purposes, the invention is a production method for whole fruit powder without maltodextrin, silicon dioxide, artificial flavor or artificial colorant, comprising the following process steps:
- Obtaining mash from fruits,
- Adding 150-350 mg of organic acid to 1 kg of mash,
- Obtaining fruit puree with dry matter proportion in the range of 30-65% by weight (25-64° Brix) from said mash by evaporation method,
- Adding carrier raw materials containing one or more of cocoa butter, cocoa liquor, cocoa powder, milk, milk powder, starch, flour, oil, emulsifier, to the obtained fruit puree,
- Drying the mixture to which the carrier raw materials are added until the moisture proportion thereof falls within the range of 3% and 6% by weight.

## Claims

1. A production method for whole fruit powder for use as a sugar substitute without maltodextrin, silicon dioxide, artificial flavor or artificial colorant, **characterized in that** it comprises the following process steps:
- Obtaining mash from fruits,
- Adding 150-350 mg of organic acid to 1 kg of mash
- Obtaining fruit puree with dry matter proportion in the range of 30-65% by weight from said mash by evaporation method,
- Adding at least one carrier raw material selected from a group consisting of cocoa butter, cocoa liquor, cocoa powder, milk, milk powder, starch, flour, oil, and emulsifier to the obtained fruit puree,
- Drying the mixture to which the carrier raw material/s is/are added until the moisture proportion thereof falls within the range of 3% and 6% by weight.

2. The method according to claim 1, **characterized in that** it comprises the process step of applying heat treatment between 1-10 minutes at a temperature of 80 ⁰C-90 ⁰C in order to inactivate undesired enzymes and soften the cell tissues of the fruit.

3. The method according to claim 1, **characterized in that** it comprises the process step of degradation of compounds such as fiber, cellulose, hemicellulose, lignin, pectin in the mash.

4. The method according to claim 3, **characterized in that** it comprises the process step of applying homogenization and/or centrifugation to degradation compounds such as fiber, cellulose, hemicellulose, lignin, pectin in the mash.

5. The method according to claim 1, **characterized in** it comprises the process step of degrading the mash by enzymatic means.

6. The method according to claim 1, **characterized in that** it comprises the process step of evaporation wherein an evaporator operating under vacuum at temperatures ranging from 80 °C-100 °C is used.

7. The method according to claim 1, **characterized in that** it comprises the process step of drying which takes place at pressures varying between 2 and 4 bars in the temperature range of 120 °C to 170 °C.

8. The method according to claim 1, **characterized in that** it comprises the process step of adding at least one carrier compound selected from a group consisting of cocoa butter, cocoa liquor, cocoa powder, milk, milk powder, whey, whey powder, starch, flour, oil, emulsifier, gum, protein isolate, etc. to the final whole fruit powder, before being used in products such as chocolates, fat-based fillings, biscuits and cakes.

9. The method according to claim 8, **characterized in that** it comprises the process step of passing the fruit powder, to which the carrier compound is added, through the refining rollers until its particle size is reduced to 150-350µ.

10. The method according to claim 1, **characterized in that** the temperature of the fruit puree to which carrier raw materials are added is between 60-100 °C.

11. A whole fruit powder for use as a sugar substitute without maltodextrin, silicon dioxide, artificial flavor or artificial colorant, obtainable by the production method of any one of preceding claims 1 to 10, **characterized in that** it comprises
- fruit in the range of 75-95% by weight and
- at least one carrier compound selected from a group consisting of cocoa butter, cocoa liquor, cocoa powder, milk, milk powder, starch, flour, oil and emulsifier, in the range of 5-25% by weight.

12. The whole fruit powder according to claim 11, **characterized in that** it comprises
- 95% by weight of fruit and
- 5% by weight of carrier compound.

13. The whole fruit powder according to claim 11, **characterized in that** said whole fruit powder comprises total sugar in the range of 30-85% by weight depending on the product to be used and the carrier compounds used.

## Patentansprüche

1. Verfahren zur Herstellung von Vollfruchtpulver zur Verwendung als Zuckeraustauschstoff ohne Maltodextrin, Siliciumdioxid, künstliches Aroma oder künstliche Farbstoffe, **dadurch gekennzeichnet, dass** es die folgenden Verfahrensschritte umfasst:
- Gewinnung von Maische aus Früchten,
- Zugabe von 150-350 mg organischer Säure zu 1 kg Maische
- Gewinnung von Fruchtpüree mit einem Trockensubstanzanteil im Bereich von 30-65 Gew.-% aus der genannten Maische durch Verdampfungsverfahren,
- Zugabe von mindestens einem Trägerrohstoff, ausgewählt aus der Gruppe bestehend aus Kakaobutter, Kakaomasse, Kakaopulver, Milch, Milchpulver, Stärke, Mehl, Öl und Emulgator zum erhaltenen Fruchtpüree,
- Trocknen der Mischung, der der/die Trägerrohstoff/e zugesetzt wird/werden, bis der Feuchtigkeitsanteil in den Bereich von 3 und 6 Gew.-% fällt.

2. Verfahren nach Anspruch 1, **dadurch gekennzeichnet, dass** es den Verfahrensschritt einer Wärmebehandlung von 1-10 Minuten bei einer Temperatur von 80 °C-90 °C umfasst, um unerwünschte Enzyme zu inaktivieren und das Zellgewebe der Frucht aufzuweichen.

3. Verfahren nach Anspruch 1, **dadurch gekennzeichnet, dass** es den Verfahrensschritt des Abbaus von Verbindungen wie Fasern, Zellulose, Hemizellulose, Lignin, Pektin in der Maische umfasst.

4. Verfahren nach Anspruch 3, **dadurch gekennzeichnet, dass** es den Verfahrensschritt der Durchführung von Homogenisieren und/oder Zentrifugieren auf Abbau von Verbindungen wie Faser, Zellulose, Hemizellulose, Lignin, Pektin in der Maische umfasst.

5. Verfahren nach Anspruch 1, **dadurch gekennzeichnet, dass** es den Verfahrensschritt des Abbaus der Maische durch enzymatische Mittel umfasst.

6. Verfahren nach Anspruch 1, **dadurch gekennzeichnet, dass** es den Verfahrensschritt des Verdampfens umfasst, wobei ein Verdampfer verwendet wird, der unter Vakuum bei Temperaturen im Bereich von 80 °C-100 °C arbeitet.

7. Verfahren nach Anspruch 1, **dadurch gekennzeichnet, dass** es den Verfahrensschritt des Trocknens umfasst, der bei einem Druck zwischen 2 und 4 bar im Temperaturbereich von 120 °C bis 170 °C erfolgt.

8. Verfahren nach Anspruch 1, **dadurch gekennzeichnet, dass** es den Verfahrensschritt der Zugabe mindestens einer Trägerverbindung, ausgewählt aus der Gruppe bestehend aus Kakaobutter, Kakaomasse, Kakaopulver, Milch, Milchpulver, Molke, Molkepulver, Stärke, Mehl, Öl, Emulgator, Gummi, Proteinisolat usw., zum fertigen Vollfruchtpulver umfasst, bevor es in Produkten wie Schokolade, Füllungen auf Fettbasis, Keksen und Kuchen verwendet wird.

9. Verfahren nach Anspruch 8, **dadurch gekennzeichnet, dass** es den Verfahrensschritt des Durchlaufens des Fruchtpulvers, dem die Trägerverbindung zugesetzt ist, durch die Raffinierwalzen umfasst, bis dessen Partikelgröße auf 150-350µ reduziert ist.

10. Verfahren nach Anspruch 1, **dadurch gekennzeichnet, dass** die Temperatur des Fruchtpürees, dem Trägerrohstoffe zugesetzt werden, zwischen 60-100 °C liegt.

11. Vollfruchtpulver zur Verwendung als Zuckeraustauschstoff ohne Maltodextrin, Siliciumdioxid, künstliches Aroma oder künstlichen Farbstoff, erhältlich durch das Herstellungsverfahren nach einem der vorhergehenden Ansprüche 1 bis 10, **dadurch gekennzeichnet, dass** es umfasst
- Früchte im Bereich von 75-95 Gew.-% und
- mindestens eine Trägerverbindung, ausgewählt aus der Gruppe bestehend aus Kakaobutter, Kakaomasse, Kakaopulver, Milch, Milchpulver, Stärke, Mehl, Öl und Emulgator, im Bereich von 5-25 Gew.-%.

12. Vollfruchtpulver nach Anspruch 11, **dadurch gekennzeichnet, dass** es umfasst
- 95 Gew.-% Frucht und
- 5 Gew.-% Trägerverbindung.

13. Vollfruchtpulver nach Anspruch 11, **dadurch gekennzeichnet, dass** das genannte Vollfruchtpulver je nach dem zu verwendenden Produkt und den verwendeten Trägerverbindungen einen Gesamtzuckergehalt im Bereich von 30-85 Gew.-% aufweist.

## Revendications

1. Un procédé de fabrication de poudre de fruits entiers destinée à être utilisée comme substitut du sucre, sans maltodextrine, dioxyde de silicium, arôme artificiel ou colorant artificiel, **caractérisé en ce qu'**il comprend les étapes suivantes :
- Obtenir du moût à partir de fruits,
- Ajouter 150-350 mg d'acide organique à 1 kg de moût
- Obtenir une purée de fruits avec une teneur en matière sèche comprise entre 30-65 % en poids à partir de ladite purée par une méthode d'évaporation,
- Ajouter au moins une matière première de support choisie parmi un groupe composé de beurre de cacao, liqueur de cacao, poudre de cacao, lait, poudre de lait, amidon, farine, huile et émulsifiant à la purée de fruits obtenue,
- Sécher le mélange auquel la ou les matières premières de support ont été ajoutées jusqu'à ce que leur teneur en humidité se situe entre 3 % et 6 % en poids.

2. La méthode selon la revendication 1, **caractérisée en ce qu'**il comprend l'étape d'application d'un traitement thermique pendant 1-10 minutes à une température comprise entre 80 °C-90 °C afin d'inactiver les enzymes indésirables et de ramollir les tissus cellulaires du fruit.

3. La méthode selon la revendication 1, **caractérisée en ce qu'**elle comprend l'étape de dégradation de composés tels que les fibres, la cellulose, l'hémicellulose, la lignine, la pectine dans le moût.

4. La méthode selon la revendication 3, **caractérisée en ce qu'**elle comprend l'étape d'application d'une homogénéisation et/ou d'une centrifugation aux composés de dégradation tels que les fibres, la cellulose, l'hémicellulose, la lignine, la pectine dans le moût.

5. La méthode selon la revendication 1, **caractérisée en ce qu'**elle comprend l'étape de dégradation du moût par des moyens enzymatiques.

6. La méthode selon la revendication 1, **caractérisée en ce qu'**elle comprend l'étape de procédé d'évaporation dans laquelle on utilise un évaporateur fonctionnant sous vide à des températures comprises entre 80 °C-100 °C.

7. La méthode selon la revendication 1, **caractérisée en ce qu'**elle comprend l'étape de séchage qui se déroule à des pressions variant entre 2 et 4 bars dans une plage de températures comprise entre 120 °C à 170 °C.

8. La méthode selon la revendication 1, **caractérisée en ce qu'**elle comprend l'étape d'ajout d'au moins un composé support choisi parmi un groupe comprenant le beurre de cacao, la liqueur de cacao, la poudre de cacao, le lait, la poudre de lait, le lactosérum, la poudre de lactosérum, l'amidon, la farine, l'huile, l'émulsifiant, la gomme, l'isolat de protéines, etc. à la poudre de fruit entier finale, avant d'être utilisée dans des produits tels que les chocolats, les fourrages à base de graisse, les biscuits et les gâteaux.

9. La méthode selon la revendication 8, **caractérisée en ce qu'**elle comprend l'étape de passage de la poudre de fruit, à laquelle le composé support est ajouté, à travers les rouleaux de raffinage jusqu'à ce que sa taille de particule soit réduite à 150-350 µ.

10. La méthode selon la revendication 1, **caractérisée en ce que** la température de la purée de fruits à laquelle sont ajoutées les matières premières de support est comprise entre 60-100 °C.

11. Une poudre de fruit entier destinée à être utilisée comme substitut du sucre, sans maltodextrine, dioxyde de silicium, arôme artificiel ou colorant artificiel, pouvant être obtenue par la méthode de production de l'une quelconque des revendications 1 à 10 précédentes, **caractérisée en ce qu'**elle comprend
- fruit dans une gamme de 75-95 % en poids et
- au moins un composé de support choisi parmi un groupe comprenant le beurre de cacao, la liqueur de cacao, la poudre de cacao, le lait, la poudre de lait, l'amidon, la farine, l'huile et l'émulsifiant, dans une gamme de 5-25 % en poids.

12. La poudre de fruit entier selon la revendication 11, **caractérisée en ce qu'**elle comprend
- 95 % en poids de fruits et
- 5 % en poids de composé de support.

13. La poudre de fruit entier selon la revendication 11, **caractérisée en ce que** ladite poudre de fruit entier comprend un total de sucres compris entre 30-85 % en poids, en fonction du produit à utiliser et des composés de support utilisés.
